# FASCICULE DE BREVET EUROPEEN

(11) **EP 2 133 633 B1**
(45) Date de publication et mention de la délivrance du brevet: **31.10.2018**
(21) Numéro de dépôt: 09354026.8
(22) Date de dépôt: 09.06.2009
(51) Int. Cl.: F24F 5/00, C09K 5/06, E04F 13/00, F28D 20/02

(54) **Installation utilisant un revêtement pariétal**
Installation mit einer Wandverkleidung
Installation having a parietal covering

(30) Priorité: 10.06.2008 FR 0803222
(43) Date de publication de la demande: 16.12.2009
(73) Titulaire: Commissariat à l'Énergie Atomique et aux Énergies Alternatives, 75015 Paris (FR); GERFLOR, 69100 Villeurbanne (FR)
(72) Inventeur: Corgier, David, 73000 Chambéry (FR); Ferlay, Charles, 69490 Pontcharra sur Turdine (FR); Julien, Hervé, 42110 Feurs (FR)
(74) Mandataire: Talbot, Alexandre

(56) Documents cités:
- EP-A- 1 455 156
- WO-A-2007/039221
- DE-C1- 10 019 931
- DE-U1-202006 001 051
- JP-A- 2002 195 770
- US-A- 4 572 864
- US-A1- 2003 054 141
- US-A1- 2004 170 806

## Description

### Domaine technique de l'invention

L'invention est relative à un revêtement pariétal interne avec au moins une première couche comportant un matériau à changement de phase.

### État de la technique

Il existe deux principaux modes de chauffage dans le bâtiment, la convection qui chauffe l'air et le rayonnement qui transmet directement de la chaleur aux objets et aux êtres vivants. Dans une pièce, la notion de confort dépend en partie de la température de l'air ambiant de la pièce. Elle dépend aussi de la température des parois de la pièce et des objets placés dans cette pièce. La notion de confort résulte aussi de la vitesse de l'air et de l'hygrométrie. Le chauffage par rayonnement des différentes parois d'une pièce permet d'obtenir les conditions de confort plus aisément pour une température d'air de la pièce plus basse. Ceci peut contribuer à une réduction de la consommation énergétique globale du bâtiment.

Le brevet US 5501268 divulgue un système pour climatiser, c'est-à-dire chauffer et refroidir, un bâtiment en utilisant des matériaux à changement de phase. Les parois intérieures du bâtiment sont recouvertes d'un revêtement pariétal comportant au moins un matériau à changement de phase. Typiquement ce revêtement pariétal est à base de gypse comportant de la paraffine (de 5 à 30% en poids) en tant que matériau à changement de phase. En période de surchauffe, le matériau à changement de phase fond et emmagasine la chaleur dégagée lors de la surchauffe. Lorsque le bâtiment se refroidit, le matériau à changement de phase se solidifie et l'énergie stockée est restituée. Le matériau à changement de phase améliore donc l'inertie thermique du bâtiment. Cette inertie thermique permet d'éviter de chauffer en continu le bâtiment. Lorsque la paraffine est devenue liquide, le chauffage peut être arrêté sans que la température chute brusquement. Un tel revêtement à base de plâtre (chauffé entre 150 et 200°C le gypse perd de l'eau et se transforme en plâtre) permet d'équiper tout type de bâtiment après sa construction. Cependant ses performances dépendent en partie de l'isolation thermique de la pièce. De plus, l'inertie est optimisée lorsque l'air de la pièce est brassé par un ventilateur. Or, cette convection forcée peut être inconfortable pour des personnes se trouvant dans la pièce. Les variations volumiques du matériau à changement de phase peuvent accélérer le vieillissement du plâtre en altérant sa tenue mécanique et entraînant un émiettement accéléré du plâtre.

Le document DE 202006001051 divulgue un isolant pour bâtiment qui comporte une couche de matériau de stockage d'énergie qui inclut un matériau à changement de phase. La couche de stockage d'énergie est séparée d'une couche de support par un espaceur.

### Objet de l'invention

L'objet de l'invention consiste à réaliser un revêtement pariétal multifonctionnel, facile à installer et permettant de rendre une pièce confortable, en apportant une homogénéité des températures dans la pièce et la réduction de la vitesse de circulation de l'air tout en réalisant des économies d'énergies.

Ce but est atteint par le fait que le revêtement comporte une seconde couche comportant des passages de circulation d'air de manière à former une lame d'air dans la seconde couche sur la face arrière de la première couche, les première et seconde couches étant collées l'une à l'autre pour former une feuille unique.

Selon un développement de l'invention, la première couche est réalisée en matériau polymère comportant des microcapsules de paraffine.

L'invention concerne aussi une installation comportant un tel revêtement pariétal, ledit revêtement étant fixé sur au moins une paroi d'une pièce, la première couche constituant la couche libre du revêtement, l'installation comportant des moyens pour permettre la circulation d'air dans la seconde couche du revêtement.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre, en coupe, un premier mode de réalisation d'un revêtement selon l'invention.
Les figures 2 et 3 illustrent, en coupe, deux variantes d'un second mode de réalisation de l'invention.
La figure 4 illustre l'installation d'un revêtement selon la figure 2 sur une paroi d'une pièce.

### Description des modes particuliers de réalisation

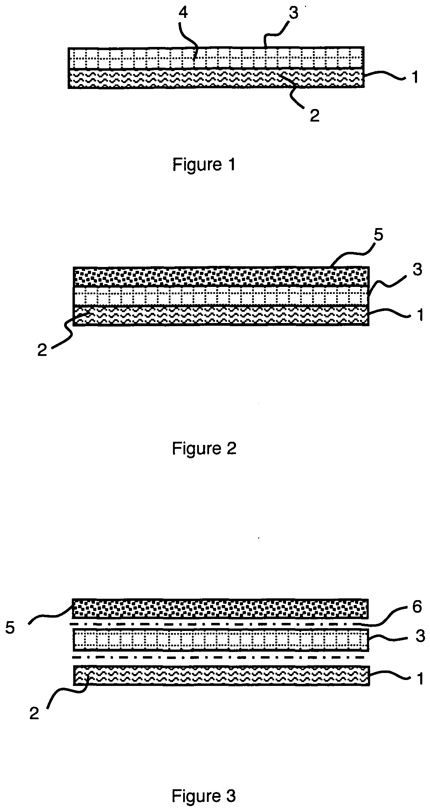

Dans le mode de réalisation particulier illustré à la figure 1, le revêtement pariétal interne est muni d'au moins une première couche 1 comportant un matériau à changement de phase 2. Le revêtement comporte en outre une seconde couche 3 comportant des passages 4 de circulation d'air de manière à former une lame d'air sur la face arrière de la première couche 1. Les première 1 et seconde 3 couches sont collées l'une à l'autre pour former une feuille unique. Les passages 4 permettent un échange de chaleur par convection naturelle ou forcée entre l'air et les éléments solides de la seconde couche 3, qui transmettent ensuite cette chaleur par conduction à la première couche 1.

La lame d'air sur la face arrière de la première couche 1 correspond à une circulation de l'air dans la seconde couche 3. Cette circulation de l'air est réalisée de manière parallèle à la première couche 1. La lame d'air est, de préférence, convective

Le revêtement, qui a l'apparence d'une simple feuille, peut ensuite être utilisé, notamment sous forme de rouleaux, comme une tapisserie pour recouvrir les murs d'une pièce, la première couche 1 étant orientée vers l'intérieur de la pièce et constituant la couche libre du revêtement. Le revêtement procure ainsi une certaine inertie thermique à la pièce offrant des avantages tant en été qu'en hiver.

En Hiver, le changement de phase, solide vers liquide, du matériau contenu dans la première couche est endothermique. Ainsi, lors du chauffage de la pièce, le matériau à changement de phase 2 contenu dans la première couche 1 se liquéfie et emmagasine de la chaleur. La pièce n'étant pas adiabatique, lorsque le chauffage est coupé, la température redescend plus ou moins rapidement en fonction de l'isolation thermique de la pièce. Cette baisse de température entraîne la solidification du matériau à changement de phase 1, qui provoque, en se solidifiant, une réaction exothermique dégageant de la chaleur, permettant ainsi de lisser la température sans changement brusque. Le dégagement de chaleur permet de maintenir la température de la pièce au-dessus d'un certain seuil avant de remettre en route le chauffage. Il est ainsi possible de mieux exploiter les apports solaires de la journée pour satisfaire les conditions de confort en fin de journée en hiver. Ce lissage permet également de faciliter la régulation de température et de réduire les consommations énergétiques de chauffage.

L'équipement de certaines ou de toutes les parois d'une pièce avec un tel revêtement rend la pièce plus confortable, notamment en intersaison.

En été, le lissage de température permet de réduire les périodes de surchauffe durant la journée et de réduire les besoins en climatisation (génération d'air froid pour l'été). De plus, l'inertie apportée permet de mieux exploiter la fraîcheur nocturne notamment avec des systèmes de ventilation naturelle ou de la sur-ventilation nocturne.

La première couche 1 comporte, de préférence, entre 15 et 60% en masse de matériau à changement de phase 2.

À titre d'exemple, la première couche 1 est réalisée en matériau polymère, de préférence en PCV, comportant des microcapsules de paraffine. Les microcapsules servent alors de matériau à changement de phase. La température de fusion des microcapsules peut être contrôlée. Cette température de fusion se situe, en fonction de la taille des microcapsules, de préférence, entre 20°C et 26°C. La couche contenant le matériau a changement de phase 2 peut être obtenue de différentes façons.

Un premier exemple de réalisation de la première couche 1 utilise une technique d'enduction (« Spread Coating » en anglais), les particules du matériau à changement de phase sont incorporées par mélange dans une suspension de PVC dans un plastifiant (plastisol). De préférence, ces particules sont incorporées avec les constituants solides du PVC. La pâte ainsi obtenue, de viscosité comprise entre 1 et 20 Pascal-secondes (Pa.s), est ensuite enduite à l'aide d'une racle sur un support d'enduction qui peut être un tissu de verre, de polymère, de fibres d'origines naturelles, un voile de verre, un voile de polyester ou encore un complexe de type non-tissé (cellulosique, polyéthylène PE ou autre) renforcé avec une fibre de verre. Le produit est ensuite solidifié dans un four de type four de gélification, puis laminé et conformé de manière à lui conférer son épaisseur finale sous forme de feuille ou de plaque.

Un deuxième exemple de réalisation de la première couche utilise une technique d'extrusion. A partir d'un mélange sec (« dry-blend » ou « compound » en anglais), formulation de résine dans laquelle sont absorbés les plastifiants et les constituants liquides, on incorpore les particules de matériau à changement de phase et on réalise un mélange intime de poudres. L'ensemble alimente une extrudeuse (mono-vis ou bi-vis) ou un mélangeur/plastificateur. Enfin, la matière obtenue est conformée à chaud à travers une filière pour lui donner une forme de plaque et/ou de feuille.

Selon un troisième exemple de réalisation de la première couche 1 par une technique de calandrage à partir d'un mélange sec, formulation de résine dans laquelle sont absorbés les plastifiants et les constituants liquides, les particules de matériau à changement de phase sont incorporée de manière à former un mélange intime de poudres. L'ensemble alimente un mélangeur externe puis dans une calandre, permettant d'obtenir une feuille d'épaisseur comprise, par exemple, entre 2 et 15 centimètres et d'une largeur pouvant atteindre trois mètres.

La seconde couche 3 peut, par exemple, être constituée par un textile en trois dimensions laissant libre le passage de l'air, ou par un profilé extrudé comportant des passages et permettant la circulation de l'air parallèlement à la première couche 1. Le textile en trois dimensions est typiquement réalisé en polyester ou en acrylique. De tels matériaux textiles, tissés ou non, sont notamment connus et utilisés en tant qu'amortisseurs dans les sièges d'automobiles pour leurs propriétés élastiques.

L'isolation thermique des bâtiments est très variable selon les pays et selon l'époque à laquelle les bâtiments ont été construits (évolution des méthodes et des normes de construction). Comme illustré à la figure 2, afin de s'adapter à tout type de bâtiment et de répondre aux besoins d'amélioration des performances énergétiques des bâtiments existants par leur isolation renforcée, et en conciliant le respect des conditions de confort en été, le revêtement peut intégrer, sur une face arrière, au moins une couche d'isolation thermique 5. La seconde couche 3 est alors prise en sandwich entre la première couche 1 et la couche d'isolation thermique 5. La couche d'isolation thermique 5, pouvant être collée à la seconde couche 3, permet de bénéficier directement d'un revêtement adapté à tout type de bâtiment, même si celui-ci est initialement très peu performant sur le plan énergétique en raison du mauvais niveau de performance thermique de son enveloppe.

La couche d'isolation thermique 5 peut comporter un textile non-tissé ou un renfort cellulosique permettant d'améliorer le collage du revêtement pariétal.

Selon une variante, la couche d'isolation thermique 5 peut comporter une feuille galvanisée, un support métallisé ou aluminisé permettant de renvoyer le rayonnement du matériau à changement de phase vers la première couche 1.

Comme illustré à la figure 3, les différentes couches composant le revêtement sont, de préférence, collées entre elles par un film de scellement 6, par exemple de type colle thermofusible (« hot melt adhesive » en anglais) et/ou réticulable. De telles colles supportent de hautes cadences de production, ne requièrent que deux à trois minutes de séchage et résistent à des températures comprises entre -20 et +40°C.

Le revêtement pariétal pouvant servir de papier peint, la première couche 1 constituant la couche libre est, lors de l'installation, orientée vers l'intérieur de la pièce alors que la couche isolante thermique est orientée vers une paroi de la pièce ou vers un isolant thermique épais apposé sur la paroi. L'isolant thermique épais peut aussi faire partie intégrante du revêtement et forme alors un complexe avec ce dernier qui peut être directement apposé sur la paroi. Cet isolant thermique peut avoir une épaisseur de plusieurs dizaines de millimètres. Pour des raisons d'esthétisme, la première couche peut, lors de la fabrication du revêtement, être recouverte d'une couche d'impression pouvant comporter des motifs. Cette couche d'impression est, de préférence, ensuite recouverte d'une couche de finition permettant une protection transparente de la couche d'impression. L'épaisseur de la couche de finition est, de préférence, comprise entre 10 et 20 µm ou inférieure à 10µm.

Selon une variante, la première couche 1 orientée vers l'intérieur de la pièce est recouverte d'un primaire d'encollage permettant d'améliorer l'adhérence des finitions telles que les peintures ou encore les revêtements muraux décoratifs.

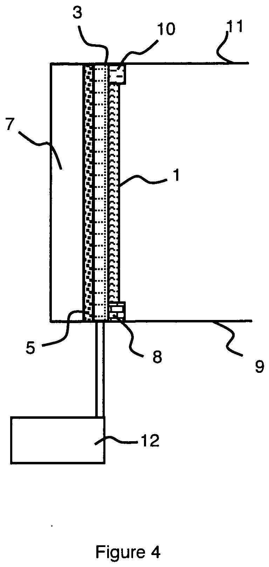

L'installation de climatisation illustrée à la figure 4 comporte un revêtement pariétal selon l'invention. Le revêtement est installé sur au moins une paroi 7 d'une pièce, et de préférence sur toutes les parois. La première couche 1, orientée vers l'intérieur de la pièce, constitue la couche libre du revêtement. Une telle installation peut comporter des moyens pour permettre la circulation d'air dans la seconde couche 3, à l'arrière de la première couche 1. L'énergie thermique est ainsi transférée par convection naturelle ou par convection forcée. La seconde couche 3 permet ainsi d'optimiser le temps de réponse de la première couche 1 aux changements thermiques en laissant circuler dans les passages 4 de la deuxième couche 3 une lame d'air sensiblement parallèle à la première couche 1.

Dans une variante de réalisation, l'installation comporte une plinthe 8 agencée au niveau de la jonction entre le sol 9 de la pièce et le revêtement pariétal. Cette plinthe 8 peut être perforée, les trous de la plinthe 8 étant reliés à la seconde couche 3 à la partie inférieure du revêtement, pour permettre une convection naturelle en mode chauffage. Cette plinthe 8, peut également être alimentée en fluide à basse température pour permettre un rafraîchissement de l'air par convection naturelle dans les passages 4 permettant la formation de la lame d'air. De manière analogue, pour optimiser le phénomène de convection naturelle, un bandeau perforé 10 peut être placé à mi-hauteur des parois, ou au niveau de la jonction entre le plafond 11 et le revêtement pariétal, reliant la seconde couche 3 du revêtement.

Un système de filtrage de l'air circulant dans les passages 4 peut être installé en partie haute et/ou en partie basse pour éviter l'encrassement de la paroi. Ce système est amovible et/ou nettoyable facilement.

Le changement de phase du matériau composant en partie la première couche 1 du revêtement pariétal peut être contrôlé en influant sur la température de la lame d'air formée dans la couche 3, à l'arrière de la couche 1. La température de la lame d'air peut être réglée afin de rendre liquide les microcapsules de paraffine ou d'accélérer leur solidification en fonction, par exemple, de la température ambiante de la pièce. Le revêtement pariétal peut, par exemple, être interfacé avec des moyens de climatisation comportant au moins un système 12 de chauffage et/ou de génération de froid par un échangeur (non représenté) situé en partie basse du revêtement pour le chauffage et/ou un échangeur (non représenté) situé en partie haute pour le rafraîchissement favorisant ainsi la circulation de l'air par convection naturelle dans la couche 3. Cette installation permet de supprimer les émetteurs du type ventilo-convecteur, radiateur, dalle active, etc., et ainsi d'éviter tout brassage forcé d'air dans la pièce, ce qui augmente le confort des personnes présentes dans ladite pièce.

Le revêtement pariétal peut comporter des capteurs autonomes (non représentés), pour piloter des équipements de chauffage, des ventilateurs, des équipements de chauffage ou de génération de froid pour contrôler le changement de phase en fonction de l'environnement, de la météo, etc.

Le revêtement pariétal est capable d'apporter une inertie thermique aux parois internes d'un bâtiment, que celui-ci soit peu ou pas isolé. Il peut être interfacé à des moyens de climatisation (chauffage/froid) pour automatiser et agir directement sur le matériau à changement de phase. Il permet, lors de la circulation d'air dans les passages de la seconde couche 3, de chauffer une pièce par rayonnement des parois. Un tel revêtement est facile à installer et permet de s'affranchir des ventilateurs, convecteurs et autres radiateurs ou sources de chaleur par convection et d'obtenir un confort maximal.

## Revendications

1. Installation de climatisation comportant :
- un revêtement pariétal interne fixé sur au moins une paroi (7) d'une pièce, le revêtement comportant :
∘ au moins une première couche (1) comportant un matériau à changement de phase (2) et formant la couche libre du revêtement,
∘ une seconde couche (3) comportant des passages (4) de circulation d'air agencés de manière à former une lame d'air dans la seconde couche (3) parallèlement à la au moins première couche (1), les première et seconde couches (1, 3) étant collées l'une à l'autre pour former une feuille unique
**caractérisé en ce que** l'installation de climatisation comporte :
- des moyens pour permettre la circulation d'air dans la seconde couche (3) du revêtement,
- des moyens de climatisation (12) pour contrôler la température de l'air circulant dans la seconde couche (3) du revêtement en fonction de la température ambiante de la pièce.

2. Installation de climatisation selon la revendication 1, **caractérisée en ce que** la au moins première couche (1) comporte entre 15 et 60% en masse de matériau à changement de phase (2).

3. Installation de climatisation selon l'une des revendications 1 et 2, **caractérisée en ce que** la au moins première couche (1) est réalisée en matériau polymère comportant des microcapsules de paraffine.

4. Installation de climatisation selon l'une quelconque des revendications 1 à 3, **caractérisée en ce que** la seconde couche (3) est constituée par un textile en trois dimensions.

5. Installation de climatisation selon l'une quelconque des revendications 1 à 3, **caractérisée en ce que** la seconde couche (3) est constituée par un profilé extrudé.

6. Installation de climatisation selon l'une quelconque des revendications 1 à 5 **caractérisée en ce que** la seconde couche (3) est prise en sandwich entre la au moins première couche (1) et une couche d'isolation thermique (5), ladite couche d'isolation thermique (5) étant collée à la seconde couche (3).

7. Installation de climatisation selon l'une quelconque des revendications 1 à 6, **caractérisée en ce qu'**elle comporte une plinthe (8) perforée, se situant à l'intersection du revêtement et d'un sol (9) et reliée à la seconde couche (3) du revêtement.

8. Installation de climatisation selon l'une quelconque des revendications 1 à 7, **caractérisée en ce qu'**elle comporte un bandeau (10) perforé placé à mi-hauteur des parois ou à l'intersection du revêtement et d'un plafond (11) et relié à la seconde couche (3) du revêtement.

## Patentansprüche

1. Klimatisierungsvorrichtung, welche aufweist:
- eine innere Wandverkleidung, die an mindestens einer Wand (7) eines Zimmers befestigt ist, wobei die Verkleidung umfasst:
- mindestens eine erste Schicht (1), die ein Material mit Phasenumwandlung (2) enthält und die Außenschicht der Verkleidung bildet,
- eine zweite Schicht (3), die Durchlässe (4) zur Luftzirkulation enthält, welche dergestalt ausgeführt sind, dass sie in der zweiten Schicht (3) parallel zu der mindestens einen ersten Schicht (1) einen Luftzwischenraum bilden, wobei die erste und die zweite Schicht (1,3) aneinander geklebt sind, um eine einzige Folie zu bilden,
**dadurch gekennzeichnet,**
**dass** die Klimatisierungsvorrichtung aufweist:
- Mittel, um die Luftzirkulation in der zweiten Schicht (3) der Verkleidung zu ermöglichen,
- Klimatisierungsmittel (12), um die Temperatur der in der zweiten Schicht (3) der Verkleidung zirkulierenden Luft in Abhängigkeit von der Umgebungstemperatur in dem Zimmer zu kontrollieren.

2. Klimatisierungsvorrichtung nach Anspruch 1,
**dadurch gekennzeichnet,**
**dass** die mindestens eine erste Schicht (1) zwischen 15 und 60 % Gewichtsanteile an Material mit Phasenumwandlung (2) enthält.

3. Klimatisierungsvorrichtung nach einem der Ansprüche 1 und 2,
**dadurch gekennzeichnet,**
**dass** die mindestens eine erste Schicht (1) aus einem Polymer-Werkstoff hergestellt ist, das Paraffin-Mikrokapseln enthält.

4. Klimatisierungsvorrichtung nach einem der Ansprüche 1 bis 3,
**dadurch gekennzeichnet,**
**dass** die zweite Schicht (3) von einem dreidimensionalen Textil gebildet wird.

5. Klimatisierungsvorrichtung nach einem der Ansprüche 1 bis 3,
**dadurch gekennzeichnet,**
**dass** die zweite Schicht (3) von einem stranggepressten Profilteil gebildet wird.

6. Klimatisierungsvorrichtung nach einem der Ansprüche 1 bis 5,
**dadurch gekennzeichnet,**
**dass** die zweite Schicht (3) in Verbundbauweise zwischen der mindestens einen ersten Schicht (1) und einer Wärmedämmschicht (5) angeordnet ist, wobei diese Wärmedämmschicht (5) auf die zweite Schicht (3) geklebt wird.

7. Klimatisierungsvorrichtung nach einem der Ansprüche 1 bis 6,
**dadurch gekennzeichnet,**
**dass** sie eine Fußleiste mit durchgehenden Bohrungen aufweist, die sich an der Schnittlinie der Verkleidung mit einem Boden (9) befindet und mit der zweiten Schicht (3) der Verkleidung verbunden ist.

8. Klimatisierungsvorrichtung nach einem der Ansprüche 1 bis 7,
**dadurch gekennzeichnet,**
**dass** sie ein Band (10) mit durchgehenden Bohrungen aufweist, das auf halber Höhe der Wände oder an der Schnittlinie der Verkleidung mit einer Decke (11) angebracht ist und mit der zweiten Schicht (3) der Verkleidung verbunden ist.

## Claims

1. Air conditioning installation comprising:
- an internal wall covering fixed to at least one wall (7) of a room, the covering comprising:
∘ at least a first layer (1) comprising a phase change material (2) and forming the free layer of the covering,
∘ a second layer (3) comprising air flow passages (4) arranged so as to form an air gap in the second layer (3) in parallel manner to the at least first layer (1), the first and second layers (1, 3) being bonded to one another to form a single sheet,
**characterized in that** the air conditioning installation comprises:
- means enabling an air flow to take place in the second layer (3) of the covering,
- air conditioning means (12) to control the temperature of the air flowing in the second layer (3) of the covering according to the ambient temperature of the room.

2. Air conditioning installation according to claim 1, **characterized in that** the at least first layer (1) comprises between 15 and 60% by weight of phase change material (2).

3. Air conditioning installation according to one of claims 1 and 2, **characterized in that** the at least first layer (1) is made from polymer material comprising paraffin microcapsules.

4. Air conditioning installation according to any one of claims 1 to 3, **characterized in that** the second layer (3) is constituted by a three-dimensional textile.

5. Air conditioning installation according to any one of claims 1 to 3, **characterized in that** the second layer (3) is constituted by an extruded section.

6. Air conditioning installation according to any one of claims 1 to 5, **characterized in that** the second layer (3) is sandwiched between the at least first layer (1) and a thermal insulation layer (5), said thermal insulation layer (5) being bonded to the second layer (3).

7. Air conditioning installation according to any one of claims 1 to 6, **characterized in that** it comprises a perforated baseboard (8) located at the intersection of the covering and of a floor (9) and joined to the second layer (3) of the covering.

8. Air conditioning installation according to any one of claims 1 to 7, **characterized in that** it comprises a perforated strip (10) located at mid-height of the walls or at the intersection of the covering and of a ceiling (11) and joined to the second layer (3) of the covering.
